# EUROPÄISCHE PATENTSCHRIFT

(11) **EP 2 228 329 B1**
(45) Veröffentlichungstag und Bekanntmachung des Hinweises auf die Patenterteilung: **24.07.2013**
(21) Anmeldenummer: 10000040.5
(22) Anmeldetag: 05.01.2010
(51) Int. Cl.: B65G 47/90

(54) **Produktgreifer**
Product gripper
Dispositif de préhension de produit

(30) Priorität: 09.03.2009 DE 102009012331
(43) Veröffentlichungstag der Anmeldung: 15.09.2010
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A1- 2 039 632
- WO-A1-2005/051812
- WO-A2-99/00306
- GB-A- 2 435 257

## Beschreibung

Die Erfindung betrifft einen Produktgreifer zum Aufnehmen eines Produkts, mit zwei Schaufelblättern, einem Antriebsmittel, um die Schaufelblätter zwischen einer ersten Position, in welcher die Schaufelblätter auf gegenüberliegenden Seiten des aufzunehmenden Produkts auf eine Auflage für das aufzunehmende Produkt aufsetzbar sind, und einer zweiten Position zu bewegen, in welcher sich die Schaufelblätter zumindest teilweise unter dem aufzunehmenden Produkt befinden, und einem Niederhalter zum Fixieren des aufzunehmenden Produkts, während die Schaufelblätter darunter bewegt werden, wobei der Niederhalter oberhalb einer durch die Schaufelblätter definierten Schaufelblattebene angeordnet ist.

Derartige Produktgreifer kommen beispielsweise in der Lebensmittelindustrie zum Einsatz, um Lebensmittelprodukte von einem ersten Fördermittel auf ein zweites Fördermittel umzusetzen, zu sortieren oder in eine Verpackung einzubringen. Typischerweise sind die Produktgreifer an dem beweglichen Teil eines Roboters montiert.

Bei einem bekannten Produktgreifer der eingangs genannten Art sind die Schaufelblätter starr an einer Rahmenstruktur des Produktgreifers angebracht, und der Niederhalter umfasst ein elastisch verformbares Bauteil, dessen dem aufzunehmenden Produkt zugewandte Unterseite im unbeladenen Zustand des Produktgreifers einen Abstand zu der Schaufelblattebene aufweist, der geringer als die Höhe des aufzunehmenden Produkts ist, so dass beim Absenken des Produktgreifers auf das aufzunehmende Produkt zuerst das elastisch verformbare Bauteil an der Produktoberseite angreift und anschließend die Schaufelblätter auf der Produktauflage aufsetzen. Dies hat den Nachteil, dass sich der Niederhalter an dem Produkt abstützt, während der Produktgreifer insgesamt weiter abgesenkt wird, um die Schaufelblätter mit der Produktauflage in Kontakt zu bringen.

Der Erfindung liegt die Aufgabe zugrunde, einen Produktgreifer zu schaffen, der ein schonenderes Produkthandling ermöglicht und ein aufgenommenes Produkt beim Ablegen desselben möglichst schnell freigibt.

Gelöst wird die Aufgabe erfindungsgemäß durch einen Produktgreifer mit den Merkmalen des Anspruchs 1 und insbesondere dadurch, dass die Schaufelblätter federnd an einer Rahmenstruktur des Produktgreifers gelagert sind und der Niederhalter entgegen der Rückstellkraft von den Schaufelblättern zugeordneten Federelementen auf die Schaufelblätter zu bewegbar ist, um mit dem aufzunehmenden Produkt in Eingriff gebracht zu werden.

Es ist also ein Abstand zwischen dem Niederhalter und der Schaufelblattebene vorgesehen, der dazu führt, dass der Produktgreifer beim Aufnehmen eines Produkts zuerst mit den Schaufelblättern auf der Produktauflage aufsetzt, und erst danach der Niederhalter an dem Produkt angreift. Dies bedeutet, dass sich beim Absenken des Produktgreifers nicht der Niederhalter an dem Produkt abstützt, sondern sich die Schaufelblätter an der Produktauflage abstützen, während der Niederhalter mit dem Produkt in Eingriff gebracht wird. Die federnde Lagerung der Schaufelblätter trägt somit zu einer Abbremsung des Produktgreifers bei, wenn dieser auf ein aufzunehmendes Produkt abgesenkt wird, wodurch Beschädigungen des Produkts durch den sich absenkenden Niederhalter besser vermieden werden können.

Ferner sorgt die gefederte Lagerung der Schaufelblätter beim Ablegen eines aufgenommenen Produkts dafür, dass der Niederhalter und das Produkt außer Eingriff geraten können, ohne dass die Schaufelblätter hierzu von der Produktauflage abgehoben werden müssen. Es ist also eine Lösung des Niederhalters von dem abgelegten Produkt möglich, bevor die sich aus ihrer zweiten Position in ihre erste Position bewegenden Schaufelblätter und das Produkt vollständig außer Eingriff geraten sind. Im Ergebnis wird hierdurch eine schnellere Freigabe eines abgelegten Produkts durch den Produktgreifer erreicht.

Die Federelemente, bei denen es sich beispielsweise um Schraubendruckfedern handeln kann, werden beim Absenken des Niederhalters auf das Produkt also gespannt. Durch die gespannten Federelemente wird eine von dem Produkt weg orientierten Kraft auf den Niederhalter ausgeübt, die zum einen zu einer schnellen Lösung des Niederhalters von dem Produkt bei dessen Ablage beiträgt. Zum anderen führt das Ineingriffbringen des Niederhalters mit dem Produkt entgegen der Rückstellkraft der Federelemente bei der Aufnahme des Produkts dazu, dass der Niederhalter gewissermaßen gebremst auf das aufzunehmende Produkt abgesenkt wird, was zur Vermeidung einer Beschädigung des Produkts beiträgt.

Vorteilhafte Ausbildungen der Erfindung sind den Unteransprüchen, der Beschreibung und der Zeichnung zu entnehmen.

Gemäß einer Ausführungsform ist der Federweg der Schaufelblätter so bemessen, dass der Abstand zwischen dem Niederhalter und der Schaufelblattebene ausreichend weit reduzierbar ist, um das aufzunehmende Produkt zwischen dem Niederhalter und den Schaufelblättern zu fixieren.

Gemäß einer weiteren Ausführungsform sind Arretiermittel vorgesehen, um die Schaufelblätter in einem Abstand zu dem Niederhalter zu arretieren, in welchem das aufgenommene Produkt zwischen dem Niederhalter und den Schaufelblättern gehalten ist. Die Arretiermittel sorgen mit anderen Worten dafür, dass das aufgenommene Produkt sicher durch den Produktgreifer gehalten ist, indem sie verhindern, dass sich die Schaufelblätter beim Abheben des Produktgreifers von der Produktauflage durch eine Entspannung der gespannten Federelemente von der Rahmenstruktur wegbewegen können.

Bevorzugt umfassen die Arretiermittel mit den Schaufelblättern verbundene Schultern und entsprechende mit dem Niederhalter verbundene Vorsprünge.

Besonders einfach lässt sich die Arretierung der Schaufelblätter herstellen bzw. lösen, wenn sich die mit den Schaufelblättern verbundenen Schultern und die mit dem Niederhalter verbundenen Vorsprünge im Wesentlichen parallel oder schräg zu der Schaufelblattebene erstrecken, da die Schultern und Vorsprünge in diesem Fall gleichzeitig mit der Bewegung der Schaufelblätter aus ihrer ersten Position in ihre zweite Position in Eingriff gebracht und durch eine Bewegung der Schaufelblätter aus ihrer zweiten Position in ihre erste Position außer Eingriff gebracht werden können.

Eine besonders einfache bauliche Ausgestaltung des Produktgreifers wird erreicht, wenn jedes Schaufelblatt und die damit verbundene Schulter einstückig miteinander ausgebildet sind. Grundsätzlich können sie aber auch mehrstückig miteinander ausgebildet sein. Beispielsweise können jedes Schaufelblatt und seine ihm zugeordnete Schulter Teile einer Schaufel bilden.

Die mit dem Niederhalter verbundenen Vorsprünge können durch an den Niederhalter angebrachte Winkelstücke gebildet sein.

Bevorzugt sind die Arretiermittel, insbesondere die mit dem Niederhalter verbundenen Vorsprünge, verstellbar, insbesondere höhenverstellbar, da sich der Produktgreifer hierdurch auf einfache Weise für die Aufnahme von Produkten mit unterschiedlichen Produkthöhen einrichten lässt.

Um sich an die Kontur der Oberseite des aufzunehmenden Produkts anpassen zu können, ist der Niederhalter an seiner Unterseite bevorzugt verformbar ausgebildet. Dies trägt zur Vermeidung einer Beschädigung des Produkts durch den Niederhalter bei und sorgt gleichzeitig für eine zuverlässigere Fixierung des Produkts. Ist der Niederhalter an seiner Unterseite elastisch verformbar ausgebildet, so lassen sich unterschiedliche Produkte trotz gewisser Toleranzen in den Abmessungen, insbesondere in der Produkthöhe, zuverlässig und schonend fixieren. Grundsätzlich braucht der Niederhalter aber keine Elastizität aufzuweisen, da die Produkte selbst, insbesondere Lebensmittelprodukte, üblicherweise eine gewisse Kompressibilität aufweisen, die ausreicht, um Abweichungen in der Produkthöhe auszugleichen.

Gemäß einer Ausführungsform weist der Niederhalter an seiner Unterseite einen Bandgurt auf. Hierdurch wird ein besonders großflächiger Kontakt zwischen Niederhalter und Produkt erreicht, was zu einer schonenden und zuverlässigen Fixierung des Produkts beiträgt.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine Seitenansicht eines erfindungsgemäßen Produkt-greifers vor der Aufnahme eines Produkts;
- Fig. 2: eine Seitenansicht des Produktgreifers von Fig. 1 nach der Aufnahme des Produkts; und
- Fig. 3: eine Draufsicht des Produktgreifers von Fig. 1 vor der Aufnahme eines Produkts.

Die Figuren zeigen einen Produktgreifer, der, beispielsweise als Teil eines nicht dargestellten Roboters, dazu vorgesehen ist, ein auf einer Produktauflage 10, z.B. einem Eintrageband, liegendes Produkt 12, z.B. ein Lebensmittelprodukt, aufzunehmen und an einem anderen Ort abzulegen.

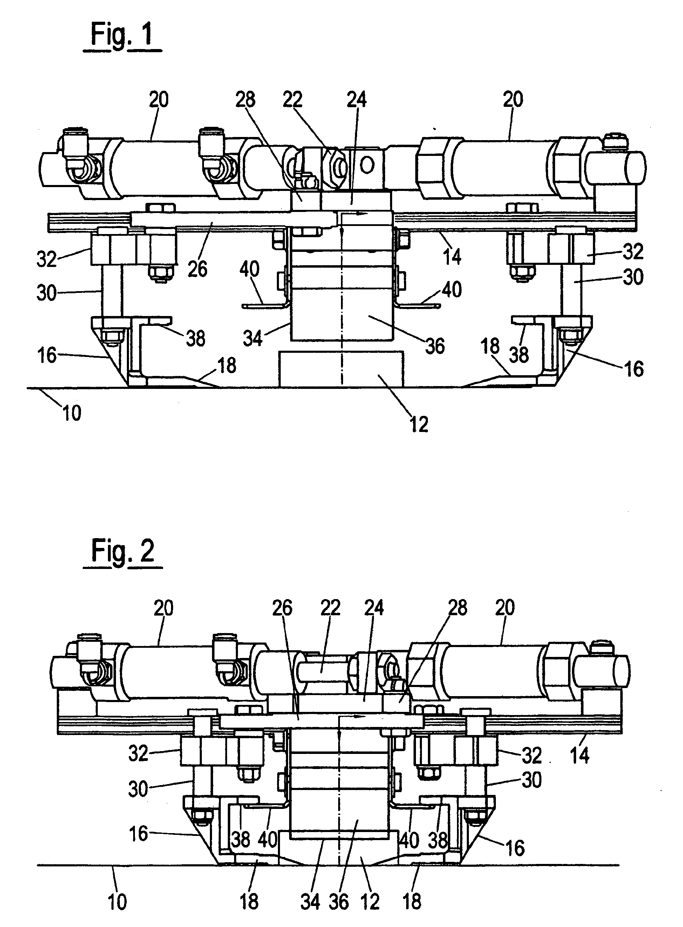

Der Produktgreifer umfasst eine Rahmenstruktur 14, an deren Unterseite zwei Schaufeln 16 angebracht sind, welche aus einer ersten Position, in der die Schaufeln 16 einen so großen Abstand zueinander aufweisen, dass sie seitlich neben dem Produkt 12 auf die Produktauflage 10 aufgesetzt werden können (Fig. 1), und einer zweiten Position bewegbar sind, in der die Schaufeln 16 einen so geringen Abstand zueinander aufweisen, dass sie das Produkt 12 zumindest teilweise untergreifen (Fig. 2).

Jede Schaufel 16 umfasst ein Schaufelblatt 18. Die Schaufelblätter 18 liegen in einer Ebene, welche nachfolgend als Schaufelblattebene bezeichnet wird.

Zur Bewegung der Schaufeln 16 aus der ersten Position in die zweite Position und umgekehrt ist ein Antriebsmechanismus vorgesehen, welcher zwei pneumatisch oder hydraulisch betätigbare Zylinder 20 umfasst, in denen jeweils ein Kolben 22 verschiebbar gelagert ist. Die Kolben 22 sind mit einem Hebelarm 24 verbunden, welcher mittig um eine zur Schaufelblattebene senkrechte Achse verdrehbar an der Rahmenstruktur 14 gelagert ist. An seinem einen Ende 28 ist der Hebelarm 24 über einen verschwenkbaren Verbindungsarm 26 mit der einen Schaufel 16 verbunden. An seinem anderen Ende 28 ist der Hebelarm 24 über einen entsprechenden Verbindungsarm 26 mit der anderen Schaufel 16 verbunden.

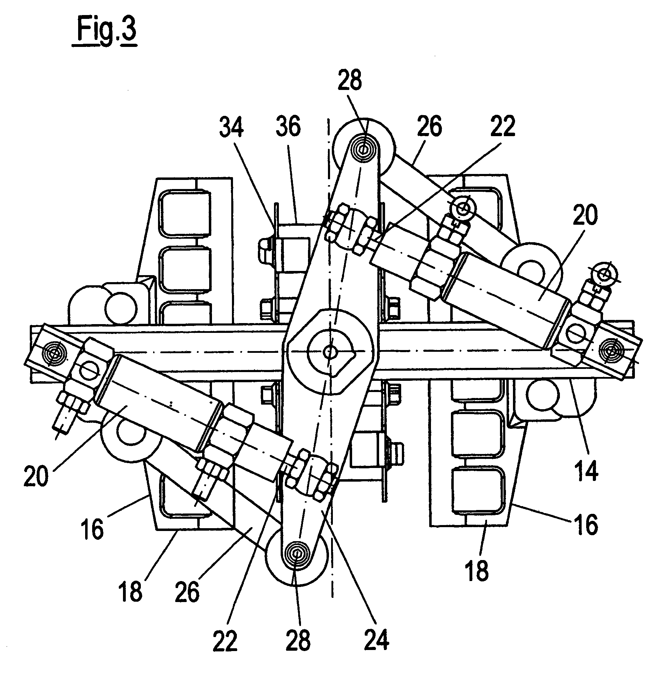

Sind die Kolben 22 in ihren jeweiligen Zylinder 20 eingefahren, so befinden sich die Schaufeln 16 in ihrer ersten Position (Fig. 1 und 3). Werden die Zylinder 20 unter Druck gesetzt, so bewirken die aus den Zylindern 20 herausfahrenden Kolben 22 eine Verdrehung des Hebelarms 24 (in Fig. 3 entgegen dem Uhrzeigersinn), durch welche die Schaufeln 16 in ihre zweite Position gebracht werden und der Produktgreifer geschlossen wird (Fig. 2). Das Öffnen des Produktgreifers, d.h. die Bewegung der Schaufeln 16 aus ihrer zweiten Position in ihre erste Position, erfolgt in umgekehrter Weise, indem die Kolben 22 wieder in ihren jeweiligen Zylinder 20 hinein gefahren werden.

Zwischen jeden Verbindungsarm 26 und der diesem zugeordneten Schaufel 16 ist ein Federelement 30 geschaltet, welches in einem Federlager 32 gelagert ist. Bei den Federelementen 30 handelt es sich um Druckfedern, die um einen gewissen Federweg komprimiert werden können. Dies ermöglicht es, die Rahmenstruktur 14 entgegen der Rückstellkraft der Federelemente 30 auch dann noch weiter abzusenken, wenn die Schaufeln 16 bereits auf der Produktauflage 10 aufsitzen.

Mittig zwischen den Schaufeln 16 ist ein Niederhalter 34 an der Unterseite der Rahmenstruktur 14 angebracht, welcher dazu dient, das aufzunehmende Produkt 12 zu fixieren und ein Verrutschen des Produkts 12 zu verhindern, während die Schaufelblätter 18 unter das Produkt 12 geschoben werden.

An seiner Unterseite weist der Niederhalter 34 einen Bandgurt 36 auf, welcher eine zur Schaufelblattebene parallele Grundorientierung besitzt. Allerdings ist der Bandgurt 36 so locker montiert, dass er im unbeladenen Zustand des Produktgreifers etwas durchhängt und sich im beladenen Zustand des Produktgreifers an die Oberseitenkontur des aufgenommenen Produkts 12 anpassen kann. Es versteht sich von selbst, dass die Anpassungsfähigkeit des Bandgurts 36 umso besser ist, je weicher dessen Material ist.

Der Bandgurt 36 ist an Trägerelementen des Niederhalters 34 befestigt, die sich im Wesentlichen parallel zur Schaufelblattebene erstrecken. Beispielsweise kann der Bandgurt 36 in Form eines Endlos-Bandgurts um entsprechend orientierte Stäbe oder Rollen geschlungen sein.

Der Niederhalter 34 ist so dimensioniert, dass der Abstand zwischen der Unterseite des Bandgurts 36 und der Schaufelblattebene im unbeladenen Zustand des Produktgreifers größer als die Höhe des aufzunehmenden Produkts 12 ist. Gleichzeitig ist der Federweg der Federelemente 30 so groß bemessen, dass die Rahmenstruktur 14 und somit auch der Niederhalter 34 nach dem Aufsetzen der Schaufeln 16 auf die Produktauflage 10 noch so weit abgesenkt werden können, dass der Bandgurt 36 mit dem aufzunehmenden Produkt 12 in Eingriff gerät und dieses mit einer zur Fixierung des Produkts 12 ausreichend großen Fixierkraft gegen die Produktauflage 10 drückt.

Da der Niederhalter 34 von oben auf das Produkt 12 gedrückt wird, versteht es sich von selbst, dass auch im beladenen Zustand des Produktgreifers zumindest für denjenigen Abschnitt des Bandgurts 36 gilt, welcher mit der Produktoberseite in Eingriff steht, dass der Abstand zwischen dem Niederhalter 34 und der Schaufelblattebene nie kleiner als die Produkthöhe sein kann. Allenfalls diejenigen Abschnitte des Niederhalters 34, die seitlich über das aufgenommene Produkt 12 überstehen, insbesondere die Abschnitte des Bandgurts 36, die an den Trägerelementen anliegen, können einen Abstand zur Schaufelblattebene aufweisen, der geringer als die Produkthöhe ist, da der Bandgurt 36 aufgrund seiner erwähnten lockeren Lagerung durch das aufgenommene Produkt 12 nach oben ausgelenkt wird.

Wie bereits erwähnt, sind die Federelemente 30 im beladenen Zustand des Produktgreifers komprimiert. Um zu verhindern, dass die Schaufeln 16 durch die komprimierten Federelemente 30 von dem Niederhalter 34 weg, d.h. nach unten, gedrückt werden, wenn der beladene Produktgreifer von der Produktauflage 10 abgehoben wird bzw. ist, sind Arretiermittel vorgesehen, die eine Verriegelung der Schaufeln 16 in einem vorbestimmten Grundabstand relativ zu dem Niederhalter 34 bewirken.

Die Arretiermittel umfassen zum einen an den Schaufeln 16 ausgebildete Schultern 38 und zum anderen den Schultern 38 zugeordnete Winkelstücke 40, die an dem Niederhalter 34 angebracht sind. Sowohl die Schultern 34 als auch die Winkelstücke 40 erstrecken sich im Wesentlichen parallel zur Schaufelblattebene, so dass sich die Schultern 38 der Schaufeln 16 bei einer Bewegung der Schaufeln 16 aus der ersten Position in die zweite Position, d.h. also beim Zusammenfahren der Schaufeln 16, über das ihnen jeweils zugeordnete Winkelstück 40 schieben können und - umgekehrt - beim Auseinanderfahren der Schaufeln 16 leicht von diesem frei kommen können. Alternativ können die Schultern 34 und/oder die Winkelstücke 40 auch schräg zur Schaufelblattebene orientiert sein.

Im vorliegenden Ausführungsbeispiel handelt es sich bei den Schaufeln 16 um einstückige Bauteile, die sowohl die Schaufelblätter 18 als auch die Schultern 38 umfassen. Alternativ ist selbstverständlich auch eine mehrteilige Ausführungsform der Schaufeln 16 denkbar.

Die Winkelstücke 40 können höhenverstellbar an dem Niederhalter 34 angebracht sein. Dies ermöglicht eine Einstellung des vorbestimmten Grundabstands zwischen Niederhalter 34 und Schaufelblattebene im beladenen Zustand des Produktgreifers, wodurch sich der Produktgreifer für die Aufnahme von unterschiedlichen Arten von Produkten einrichten lässt. Werden die Winkelstücke 40 von der Rahmenstruktur 14 weg versetzt (in Fig. 1 und 2 also nach unten), so wird der vorbestimmte Grundabstand zwischen dem Niederhalter 34 und der Schaufelblattebene größer und es lassen sich höhere Produkte aufnehmen. Umgekehrt sind die Winkelstücke 40 in Richtung der Rahmenstruktur 14 zu versetzen (in Fig. 1 und 2 also nach oben), um den vorbestimmten Grundabstand zwischen Niederhalter 34 und Schaufelblattebene zu verringern und dadurch auch Produkte 12 mit einer geringeren Höhe sicher aufnehmen zu können.

Um geringe Toleranzen in der Produkthöhe besser ausgleichen zu können, kann ein Bandgurt 36 verwendet werden, welcher eine gewisse Elastizität besitzt. Grundsätzlich braucht der Niederhalter 34 aber keine Elastizität aufzuweisen, da auch eine Kompressibilität eines aufgenommenen Produkts 12 selbst ausreichen kann, um Abweichungen in der Produkthöhe auszugleichen.

Zum Aufnehmen eines Produkts 12 wird der Produktgreifer auf die Produktauflage 10 abgesenkt, bis die Schaufeln 16 seitlich neben dem Produkt auf der Produktauflage 10 aufsetzen. Hiernach wird der Produktgreifer unter Kompression der Federelemente 30 weiter herunter gedrückt, bis der Niederhalter 34 an der Oberseite des Produkts 12 angreift und mit einer vorbestimmten Fixierkraft auf das Produkt 12 drückt.

Nun wird der Produktgreifer geschlossen, d.h. die Schaufeln 16 werden aus ihrer ersten Position in ihre zweite Position bewegt, wobei sich die Schaufelblätter unter das Produkt 12 schieben.

Gleichzeitig bewegen sich die Schultern 38 der Schaufeln 16 über die Winkelstücke 40 des Niederhalters 34. Dabei weisen die Schultern 38 aufgrund des Niederdrückens des Produktgreifers zur Fixierung des Produkts 12 in vertikaler Richtung gesehen einen gewissen Abstand zu den Winkelstücken 40 auf. Wird der Produktgreifer zum Umsetzen des aufgenommenen Produkts 12 von der Produktauflage 10 abgehoben, so können sich die Federelemente 30 soweit entspannen, bis die Schultern 38 der Schaufeln 16 an den Winkelstücke 40 des Niederhalters anstoßen. Das Produkt 12 wird nun mit einer Haltekraft in dem Produktgreifer gehalten, die kleiner ist als die Fixierkraft, aber dennoch ausreicht, um ein Verrutschen des Produkts 12 auf den Schaufeln 16 zu verhindern.

Zum Ablegen eines aufgenommenen Produkts 12 werden die Schaufeln 16 auseinander gefahren. Sobald die Schultern 38 der Schaufeln 16 und die Winkelstücke 40 des Niederhalters hierbei außer Eingriff geraten, entspannen sich die Federelemente 30, und das Produkt 12 wird schlagartig von dem Niederhalter 34 frei gegeben.

Bevorzugt sind die Schultern 38 der Schaufeln 16 und die Winkelstücke 40 des Niederhalters in zur Schaufelblattebene paralleler Richtung so dimensioniert, dass sie genau dann außer Eingriff geraten, wenn die Schaufelblätter 18 und das Produkt 12 außer Eingriff geraten. Auf diese Weise wird das abzulegende Produkt 12 im Wesentlichen gleichzeitig von dem Niederhalter 34 und den Schaufeln 16 freigegeben.

### Bezugszeichenliste

- 10: Ablage
- 12: Produkt
- 14: Rahmenstruktur
- 16: Schaufeln
- 18: Schaufelblatt
- 20: Zylinder
- 22: Kolben
- 24: Hebelarm
- 26: Verbindungsarm
- 28: Ende
- 30: Federelement
- 32: Federlager
- 34: Niederhalter
- 36: Bandgurt
- 38: Schulter
- 40: Winkelstück

## Patentansprüche

1. Produktgreifer zum Aufnehmen eines Produkts (12), umfassend
zwei Schaufelblätter (18),
ein Antriebsmittel, um die Schaufelblätter (18) zwischen einer ersten Position, in welcher die Schaufelblätter (18) auf gegenüberliegenden Seiten des aufzunehmenden Produkts (12) auf eine Auflage (10) für das aufzunehmende Produkt (12) aufsetzbar sind, und einer zweiten Position zu bewegen, in welcher sich die Schaufelblätter (18) zumindest teilweise unter dem aufzunehmenden Produkt (12) befinden, und
einen Niederhalter (34) zum Fixieren des aufzunehmenden Produkts (12), während die Schaufelblätter (18) darunter bewegt werden, wobei der Niederhalter (34) oberhalb einer durch die Schaufelblätter (18) definierten Schaufelblattebene angeordnet ist,
**dadurch gekennzeichnet, dass**
die Schaufelblätter (18) federnd an einer Rahmenstruktur (14) des Produktgreifers gelagert sind und
der Niederhalter (34) entgegen der Rückstellkraft von den Schaufelblättern (18) zugeordneten Federelementen (30) auf die Schaufelblätter (18) zu bewegbar ist, um mit dem aufzunehmenden Produkt (12) in Eingriff gebracht zu werden.

2. Produktgreifer nach Anspruch 1,
**dadurch gekennzeichnet, dass**
der Federweg der Schaufelblätter (18) so bemessen ist, dass der Abstand zwischen dem Niederhalter (34) und der Schaufelblattebene ausreichend weit reduzierbar ist, um das aufzunehmende Produkt (12) zwischen dem Niederhalter (34) und den Schaufelblättern (18) zu fixieren.

3. Produktgreifer nach Anspruch 1 oder 2,
**dadurch gekennzeichnet, dass**
Arretiermittel vorgesehen sind, um die Schaufelblätter (18) in einem Abstand zu dem Niederhalter (34) zu arretieren, in welchem das aufzunehmende Produkt (12) zwischen dem Niederhalter (34) und den Schaufelblättern (18) gehalten ist.

4. Produktgreifer nach Anspruch 3,
**dadurch gekennzeichnet, dass**
die Arretiermittel mit den Schaufelblättern (18) verbundene Schultern (38) und entsprechende mit dem Niederhalter (34) verbundene Vorsprünge (40) umfassen.

5. Produktgreifer nach Anspruch 4,
**dadurch gekennzeichnet, dass**
sich die mit den Schaufelblättern (18) verbundenen Schultern (38) und die mit dem Niederhalter (34) verbundenen Vorsprünge (40) im Wesentlichen parallel oder schräg zu der Schaufelblattebene erstrecken.

6. Produktgreifer nach Anspruch 4 oder 5,
**dadurch gekennzeichnet, dass**
das jedes Schaufelblatt (18) und die damit verbundene Schulter (38) einstückig miteinander ausgebildet sind.

7. Produktgreifer nach einem der Ansprüche 4 bis 6,
**dadurch gekennzeichnet, dass**
die mit dem Niederhalter (34) verbundenen Vorsprünge durch an den Niederhalter (34) angebrachte Winkelstücke (40) gebildet sind.

8. Produktgreifer nach einem der Ansprüche 3 bis 7,
**dadurch gekennzeichnet, dass**
die Arretiermittel, insbesondere die mit dem Niederhalter (34) verbundenen Vorsprünge (40), verstellbar, insbesondere höhenverstellbar, sind.

9. Produktgreifer nach einem der vorstehenden Ansprüche,
**dadurch gekennzeichnet, dass**
der Niederhalter (34) an seiner Unterseite, insbesondere elastisch, verformbar ausgebildet ist.

10. Produktgreifer nach einem der vorstehenden Ansprüche,
**dadurch gekennzeichnet, dass**
der Niederhalter (34) an seiner Unterseite einen Bandgurt (36) aufweist.

## Claims

1. A product gripper for the taking up of a product (12), comprising
two vane blades (18);
a drive means to move the vane blades (18) between a first position, in which the vane blades (18) can be placed onto a support (10) for the product (12) to be taken up at oppositely disposed sides of the product (12) to be taken up, and a second position, in which the vane blades (18) are located at least partly beneath the product (12) to be taken up; and
a downholder (34) for the fixing of the product (12) to be taken up while the vane blades (18) are moved beneath it, with the downholder (34) being arranged above a vane blade plane defined by the vane blades (18),
**characterized in that**
the vane blades (18) are resiliently supported at a frame structure (14) of the product gripper; and
**in that** the downholder (34) is movable against the restoring force of spring elements (30) associated with the vane blades (18) toward the vane blades (18) to be brought into engagement with the product (12) to be taken up.

2. A product gripper in accordance with claim 1,
**characterized in that**
the spring deflection of the vane blades (18) is dimensioned such that the spacing between the downholder (34) and the vane blade plane can be reduced sufficiently far to fix the product (12) to be taken up between the downholder (34) and the vane blades (18).

3. A product gripper in accordance with claim 1 or claim 2,
**characterized in that**
locking means are provided to lock the vane blades (18) at a spacing from the downholder (34) at which the product (12) to be taken up is held between the downholder (34) and the vane blades (18).

4. A product gripper in accordance with claim 3,
**characterized in that**
the locking means include shoulders (38) connected to the vane blades (18) and corresponding protrusions (40) connected to the downholder (34).

5. A product gripper in accordance with claim 4,
**characterized in that**
the shoulders (38) connected to the vane blades (18) and the protrusions (40) connected to the downholder (34) extend substantially parallel or obliquely to the vane blade plane.

6. A product gripper in accordance with claim 4 or claim 5,
**characterized in that**
each vane blade (18) and the shoulder (38) connected thereto are formed in one piece with one another.

7. A product gripper in accordance with any one of the claims 4 to 6,
**characterized in that**
the protrusions connected to the downholder (34) are formed by angular pieces (40) attached to the downholder (34).

8. A product gripper in accordance with any one of the claims 3 to 7,
**characterized in that**
the locking means, in particular the protrusions (40) connected to the downholder (34) are adjustable, in particular vertically adjustable.

9. A product gripper in accordance with any one of the preceding claims,
**characterized in that**
the downholder (34) is formed deformably, in particular elastically deformably, at its lower side.

10. A product gripper in accordance with any one of the preceding claims,
**characterized in that**
the downholder (34) has a belt band (36) at its lower side.

## Revendications

1. Dispositif de saisie de produit pour prendre un produit (12), comprenant
deux palettes (18),
un moyen d'entraînement pour déplacer les palettes (18) entre une première position dans laquelle les palettes (18) peuvent être posées sur des côtés opposés du produit à prendre (12) sur un support (10) pour le produit à prendre (12), et une seconde position dans laquelle les palettes (18) se trouvent au moins partiellement au-dessous du produit à prendre (12),
un élément de maintien vers le bas (34) pour fixer le produit à prendre (12) pendant que les palettes (18) sont déplacées au-dessous de celui-ci, ledit élément de maintien vers le bas (34) étant agencé au-dessus d'un plan de palette défini par les palettes (18),
**caractérisé en ce que**
les palettes (18) sont montées avec effet ressort sur une structure de cadre (14) du dispositif de saisie de produit, et
l'élément de maintien vers le bas (34) est déplaçable, à l'encontre de la force de rappel d'éléments à ressort (30) associés aux palettes (18), en direction des palettes (18), afin d'être amené en engagement avec le produit à prendre (12).

2. Dispositif de saisie de produit selon la revendication 1,
**caractérisé en ce que**
la course élastique des palettes (18) est choisie de telle manière que la distance entre l'élément de maintien vers le bas (34) et le plan de palette peut être réduite suffisamment loin pour fixer le produit à prendre (12) entre l'élément de maintien vers le bas (34) et les palettes (18).

3. Dispositif de saisie de produit selon la revendication 1 ou 2,
**caractérisé en ce qu'**il est prévu des moyens d'arrêt pour arrêter les palettes (18) à une distance de l'élément de maintien vers le bas (34) à laquelle le produit à prendre (12) et tenu entre l'élément de maintien vers le bas (34) et les palettes (18).

4. Dispositif de saisie de produit selon la revendication 3,
**caractérisé en ce que** les moyens d'arrêt incluent des épaulements (38) reliés avec les palettes (18) et des saillies correspondantes (40) reliées avec l'élément de maintien vers le bas (34).

5. Dispositif de saisie de produit selon la revendication 4,
**caractérisé en ce que** les épaulements (38) reliés avec les palettes (18) et les saillies (40) reliées avec l'élément de maintien vers le bas (34) s'étendent sensiblement parallèlement ou en oblique par rapport au plan de palette.

6. Dispositif de saisie de produit selon la revendication 4 ou 5,
**caractérisé en ce que** chaque palette (18) et l'épaulement (38) relié à celle-ci sont réalisés d'une seule pièce l'une avec l'autre.

7. Dispositif de saisie de produit selon l'une des revendications 4 à 6,
**caractérisé en ce que** les saillies reliées avec l'élément de maintien vers le bas (34) sont formées par des pièces en équerre (40) montées sur l'élément de maintien vers le bas (34)

8. Dispositif de saisie de produit selon l'une des revendications 3 à 7,
**caractérisé en ce que** les moyens d'arrêt, en particulier les saillies (40) reliées avec l'élément de maintien vers le bas (34) sont déplaçables, en particulier déplaçables en hauteur.

9. Dispositif de saisie de produit selon l'une des revendications précédentes,
**caractérisé en ce que** l'élément de maintien vers le bas (34) est réalisé déformable au niveau de sa face inférieure, en particulier de manière élastique.

10. Dispositif de saisie de produit selon l'une des revendications précédentes,
**caractérisé en ce que** l'élément de maintien vers le bas (34) comporte une ceinture en bande (36) au niveau de sa face inférieure.
